# EUROPEAN PATENT APPLICATION

(11) **EP 4 650 933 A1**
(43) Date of publication of application: **19.11.2025**
(21) Application number: 24201555.0
(22) Date of filing: 20.09.2024
(51) Int. Cl.: G06F 3/12

(54) **INFORMATION PROCESSING SYSTEM, PROGRAM, AND INFORMATION PROCESSING METHOD**

(30) Priority: 13.05.2024 JP 2024077841
(71) Applicant: FUJIFILM Business Innovation Corp., Minato-ku Tokyo (JP)
(72) Inventor: OHIRA, Yoshie, Yokohama-shi, Kanagawa (JP); KIKUMOTO, Takashi, Yokohama-shi, Kanagawa (JP); ISHIKAWA, Shogo, Yokohama-shi, Kanagawa (JP); SUGAWARA, Masafumi, Yokohama-shi, Kanagawa (JP); TONOUCHI, Masaharu, Yokohama-shi, Kanagawa (JP)
(74) Representative: Kurig, Thomas

(57) **Abstract**

An information processing system includes: a processor configured to: acquire template information including at least information related to plural regions on a printout, in which an image is to be arranged and to which different identifiers are respectively assigned; store the template information in association with a folder for storing image data; and in a case where the image data is stored in the folder, generate a print job of arranging an image corresponding to the stored image data on the printout, based on the template information associated with the folder and a preset rule.

## Description

### BACKGROUND OF THE INVENTION

### (i) Field of the Invention

The present disclosure relates to an information processing system, a program, and an information processing method.

### (ii) Description of Related Art

JP2006-074592A discloses an electronic album editing device that detects the number of images on a page edited in an electronic album in a case where the electronic album is edited using a program on a personal computer, automatically selects an optimum layout in accordance with the detected number of images, and arranges the images in accordance with the selected layout.

### SUMMARY OF THE INVENTION

An object of the present disclosure is to provide an information processing system, a program, and an information processing method capable of reducing, in a case of determining an arrangement of an image on a printout, a possibility of an arrangement different from an intention of a user, as compared with a case of determining the arrangement of the image on the printout without considering anything.

According to a first aspect of the present disclosure, there is provided an information processing system including: a processor configured to: acquire template information including at least information related to a plurality of regions on a printout, in which an image is to be arranged and to which different identifiers are respectively assigned; store the template information in association with a folder for storing image data; and in a case where the image data is stored in the folder, generate a print job of arranging an image corresponding to the stored image data on the printout, based on the template information associated with the folder and a preset rule.

According to a second aspect of the present disclosure, in the information processing system according to the first aspect, the preset rule may be a rule determined based on a name of the image data stored in the folder and an identifier.

According to a third aspect of the present disclosure, in the information processing system according to the first aspect, the preset rule may be a rule determined based on a time in a case where the image data is stored in the folder and an identifier.

According to a fourth aspect of the present disclosure, in the information processing system according to any one of the first aspect to the third aspect, the processor may be configured to: acquire the number of regions indicated by the template information associated with the folder; and in a case where the number of pieces of the image data stored in the folder is equal to or more than the acquired number of regions, generate a print job.

According to a fifth aspect of the present disclosure, in the information processing system according to any one of the first aspect to the third aspect, the processor may be configured to: acquire the number of regions indicated by the template information associated with the folder; and in a case where the number of pieces of the image data stored in the folder is less than the acquired number of regions, not generate a print job.

According to a sixth aspect of the present disclosure, in the information processing system according to any one of the first aspect to the fifth aspect, the processor may be configured to: in a case where a size of a region on the printout indicated by the template information and a size of the image to be arranged in the region are different from each other, include an entirety of the image in the region without changing an aspect ratio of the image, and arrange the image in the region by enlarging or reducing the image up to a maximum size of the image.

According to a seventh aspect of the present disclosure, in the information processing system according to any one of the first aspect to the sixth aspect, the processor may be configured to: in a case where the number of plurality of the image data to be arranged in a region indicated by the template information is more than the number of regions on the printout indicated by the template information, generate a print job by repeating a pattern of the region indicated by the template information.

According to an eighth aspect of the present disclosure, in the information processing system according to any one of the first aspect to the seventh aspect, the processor may be configured to: create and save template information by accepting designation of a range of a region for setting a position and a size of the image to be arranged on the printout, respectively.

According to a ninth aspect of the present disclosure, there is provided a program causing a computer to execute a process including: acquiring template information including at least information related to a plurality of regions on a printout, in which an image is to be arranged and to which different identifiers are respectively assigned; storing the template information in association with a folder for storing image data; and generating, in a case where the image data is stored in the folder, a print job of arranging an image corresponding to the stored image data on the printout, based on the template information associated with the folder and a preset rule.

According to a tenth aspect of the present disclosure, there is provided an information processing method including: acquiring template information including at least information related to a plurality of regions on a printout, in which an image is to be arranged and to which different identifiers are respectively assigned; storing the template information in association with a folder for storing image data; and generating, in a case where the image data is stored in the folder, a print job of arranging an image corresponding to the stored image data on the printout, based on the template information associated with the folder and a preset rule.

With the information processing system according to the first aspect of the present disclosure, in a case of determining arrangement of the image on the printout, it is possible to reduce a possibility that the arrangement is different from an intention of a user, as compared with a case of determining the arrangement of the image on the printout without considering anything.

With the information processing system according to the second aspect of the present disclosure, it is possible to reduce a possibility that the arrangement is not intended by the user, as compared with a case where the region on the printout on which the image corresponding to the stored image data is arranged is determined without considering anything.

With the information processing system according to the third aspect of the present disclosure, it is possible to reduce a possibility that the arrangement is not intended by the user, as compared with a case where the region on the printout on which the image corresponding to the stored image data is arranged is determined without considering anything.

With the information processing system according to the fourth aspect of the present disclosure, it is possible to reduce a possibility that the image is not arranged in the region included in the template information.

With the information processing system according to the fifth aspect of the present disclosure, it is possible to reduce a possibility that the image is not arranged in the region included in the template information.

With the information processing system according to the sixth aspect of the present disclosure, it is possible to reduce a possibility that the image has a size which is not intended by the user, as compared with a case where the image is arranged without considering a size of the region.

With the information processing system according to the seventh aspect of the present disclosure, even in a case where the number of regions included in the template information and the number of pieces of the image data to be arranged are different from each other, it is possible to generate a print job on the printout on which the image data is to be arranged.

With the information processing system according to the eighth aspect of the present disclosure, the user can create the template information only by setting the position and the size at which the image is to be arranged.

With the program according to the ninth aspect of the present disclosure, in a case of determining arrangement of the image on the printout, it is possible to reduce a possibility that the arrangement is different from an intention of a user, as compared with a case of determining the arrangement of the image on the printout without considering anything.

With the information processing method according to the tenth aspect of the present disclosure, in a case of determining arrangement of the image on the printout, it is possible to reduce a possibility that the arrangement is different from an intention of a user, as compared with a case of determining the arrangement of the image on the printout without considering anything.

### BRIEF DESCRIPTION OF THE DRAWINGS

Exemplary embodiment(s) of the present invention will be described in detail based on the following figures, wherein:
Fig. 1 is a diagram illustrating a system configuration of an image forming system according to an exemplary embodiment of the present disclosure;
Fig. 2 is a block diagram illustrating a hardware configuration of an image forming apparatus 10 according to the exemplary embodiment of the present disclosure;
Fig. 3 is a block diagram illustrating a functional configuration of the image forming apparatus 10 according to the exemplary embodiment of the present disclosure;
Fig. 4 is a diagram illustrating an operation screen example in a case where a user generates a print job for a printout in which a plurality of pieces of image data are to be arranged;
Fig. 5 is a diagram illustrating an operation screen example in a case where a basic setting of a template to be displayed by operating an operation button 41 in an operation screen of Fig. 4 is performed;
Fig. 6 is a diagram illustrating an operation screen example in which image data to be displayed by a user operating an OK button 42 in an operation screen illustrated in Fig. 5 is arranged;
Fig. 7 is a diagram illustrating an editing screen example of a saved template;
Fig. 8 is a flowchart illustrating an operation in a case of creating a hot folder by associating the saved template with a folder for storing the image data;
Fig. 9 is a diagram illustrating an operation screen example in a case of creating the hot folder;
Fig. 10 is a diagram illustrating a selection screen example of a template to be set in correspondence with the hot folder;
Fig. 11 is a diagram illustrating a mode in which the image data is stored in the hot folder;
Fig. 12 is a diagram illustrating an example of a print job generated by storing the image data in the hot folder;
Fig. 13 is a diagram describing a mode in which the image data is arranged in each region of the template in an order of file names;
Fig. 14 is a diagram describing a mode in which the image data is arranged in each region of the template in an order of creation date and time;
Fig. 15 is a flowchart describing details of an imposition process in step S107, which is described in the flowchart of Fig. 8;
Fig. 16 is a diagram illustrating an arrangement example in a case where the number of pieces of image data is less than the number of regions of the template;
Fig. 17 is a diagram illustrating an arrangement example in a case where the number of pieces of image data is more than the number of regions of the template;
Fig. 18 is a flowchart describing details of a size adjustment process of step S205, which is described in the flowchart of Fig. 15;
Figs. 19A and 19B are diagrams illustrating an arrangement example of the image data in a case where an aspect ratio of a region of the template and an aspect ratio of the arranged image are different from each other; and
Fig. 20 is a flowchart illustrating an operation in a case of generating a print job after waiting until image data by the number of regions of the template is stored.

### DETAILED DESCRIPTION OF THE INVENTION

Hereinafter, exemplary embodiments of the present disclosure will be described in detail with reference to the drawings.

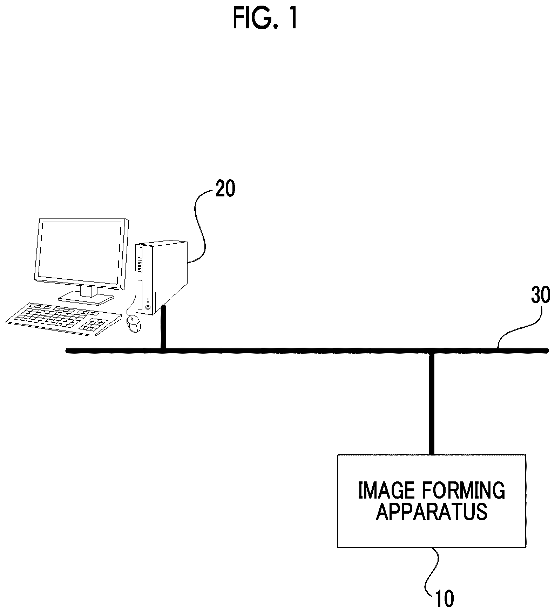

Fig. 1 is a diagram illustrating a configuration of an image forming system according to the exemplary embodiment of the present disclosure.

As illustrated in Fig. 1, the image forming system according to the exemplary embodiment of the present disclosure is configured with an image forming apparatus 10 and a terminal device 20 connected to each other by a network 30. The image forming apparatus 10 is, for example, a so-called production printer used for printing for business use, and has a function of being capable of executing a high-speed printing process with high image quality.

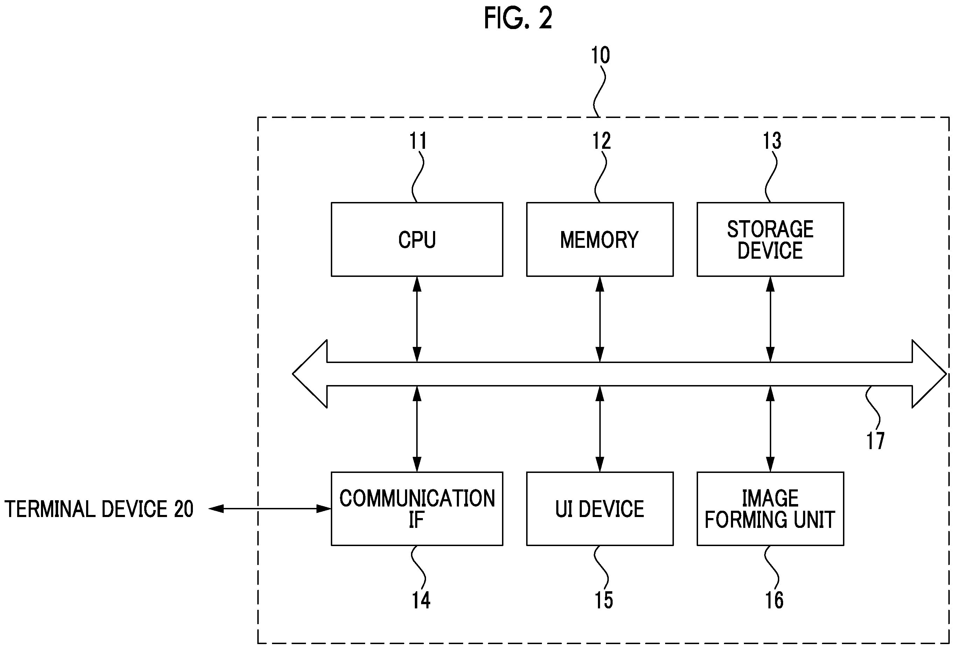

Next, a hardware configuration of the image forming apparatus 10 in the image forming system of the present exemplary embodiment is illustrated in Fig. 2.

As illustrated in Fig. 2, the image forming apparatus 10 has a CPU 11, a memory 12, a storage device 13 such as a hard disk drive, a communication interface (abbreviated as IF) 14 for transmitting and receiving data to and from an external apparatus such as the terminal device 20 via a network 30, a user interface (abbreviated as UI) device 15 including a touch panel, a liquid crystal display, and a keyboard, and an image forming unit 16. These components are connected to each other via a control bus 17.

The image forming unit 16 prints an image on a recording medium such as a printing paper sheet through steps of electrostatic charging, exposure, development, transfer, fixing, and the like.

The CPU 11 is a processor that executes a predetermined process based on a control program stored in the memory 12 or the storage device 13 to control the operation of the image forming apparatus 10. Note that, in the present exemplary embodiment, the CPU 11 reads the control program stored in the memory 12 or the storage device 13 and executes the control program. On the other hand, the present disclosure is not limited thereto. The control program may be provided in a form recorded on a computer-readable recording medium. For example, the program may be provided in a form of being recorded on an optical disk such as a compact disc (CD)-ROM and a digital versatile disc (DVD)-ROM, or in a form of being recorded on a semiconductor memory such as a Universal Serial Bus (USB) memory and a memory card. Further, the control program may be acquired from an external apparatus via a communication line connected to the communication interface 14. Furthermore, this control program may be provided as single application software or may be incorporated into software of each device of the image forming apparatus 10 as one function of the image forming apparatus 10.

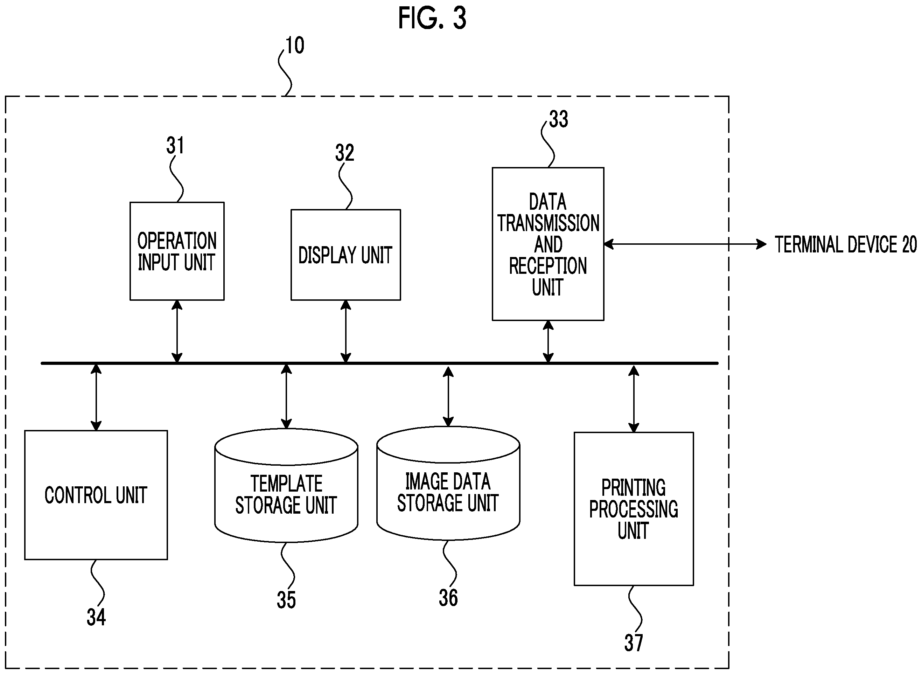

Fig. 3 is a block diagram illustrating a functional configuration of the image forming apparatus 10 implemented by executing the control program.

As illustrated in Fig. 3, the image forming apparatus 10 according to the present exemplary embodiment includes an operation input unit 31, a display unit 32, a data transmission and reception unit 33, a control unit 34, a template storage unit 35, an image data storage unit 36, and a printing processing unit 37.

The display unit 32 is controlled by the control unit 34 and displays various types of information to a user. The operation input unit 31 inputs information on various operations performed by the user. The data transmission and reception unit 33 transmits and receives data to and from an external apparatus such as the terminal device 20. The printing processing unit 37 prints an image on a recording medium such as a printing paper sheet, based on A print job generated by the control unit 34.

The control unit 34 performs control of generating a print job based on image data or the like received from the terminal device 20 via the data transmission and reception unit 33, and causing the printing processing unit 37 to execute a printing process based on the generated print job. The template storage unit 35 stores a template generated by the control unit 34. In addition, the image data storage unit 36 stores various types of image data to be printed.

Here, the template is an example of template information, and is set in advance, for example, as to which position and what size each of a plurality of pieces of image data is to be arranged in a case where a printout in which a plurality of images are to be arranged, such as a photo album, is printed.

First, by the user operating the operation input unit 31, a template including at least information related to a plurality of regions in which an image on a printout is arranged and each of which is assigned with an identifier such as numbers different from each other is generated and stored in the template storage unit 35. As will be described below, the template may be created based on a position, a size, and the like of the image data to be arranged in a case where the print job is created, or may be created by accepting designation of a frame indicating a position and a size with which the image data is to be arranged, from the operation input unit 31.

The control unit 34 acquires the template from the template storage unit 35, and stores a folder for storing the image data and the template in association with each other. The image data is stored in the image data storage unit 36 by being stored in this folder. The folder described herein may be any storage location as long as at least the image data can be stored and associated with the template, and includes a directory or the like.

Then, in a case where the image data is stored in the folder associated with the template, the control unit 34 generates a print job of a printout in which an image corresponding to the stored image data is arranged, based on the template associated with the folder and a preset rule. In a case where file data such as the image data is stored in this manner, a folder in which a preset process is executed on the stored file data is referred to as a hot folder, in some cases.

Here, the preset rule is, for example, a rule determined based on a name of the image data stored in the folder and the identifier. Alternatively, the preset rule is, for example, a rule determined based on a time in a case where the image data is stored in the folder and the identifier.

Here, in some cases, the user performs an operation of sequentially storing the image data to be included in one printout in the folder one by one, instead of storing the image data in the folder in a lump. Therefore, the control unit 34 may acquire the number of regions indicated by the template associated with the folder, and generate a print job in a case where the number of pieces of image data stored in the folder is equal to or more than the acquired number of regions. In this case, the control unit 34 acquires the number of regions indicated by the template associated with the folder, and does not generate the print job in a case where the number of pieces of image data stored in the folder is less than the acquired number of regions.

In addition, a size of an image of the image data stored in the folder and a size of a region of the template are different from each other, in some cases. Therefore, in a case where the size of the region on the printout indicated by the template and the size of the image to be arranged in the region are different from each other, the control unit 34 includes the entire image in the region without changing an aspect ratio of the image, and arrange the image in the region by enlarging or reducing the image to the maximum size of the image. Here, the enlargement or the reduction of the image means that the image is to be enlarged or reduced.

In addition, the number of pieces of image data stored in the folder and the number of regions of the template are different from each other, in some cases. Therefore, in a case where the number of plurality of pieces of image data to be arranged in the region indicated by the template is more than the number of regions indicated by the template on the printout, the control unit 34 may generate a print job by repeating a pattern of the region indicated by the template.

Next, an operation of generating a print job of a printout using a template in the image forming apparatus 10 according to the present exemplary embodiment will be described in detail with reference to the drawings.

First, an operation in a case where a template is generated by accepting an operation of a user by the operation input unit 31 will be described.

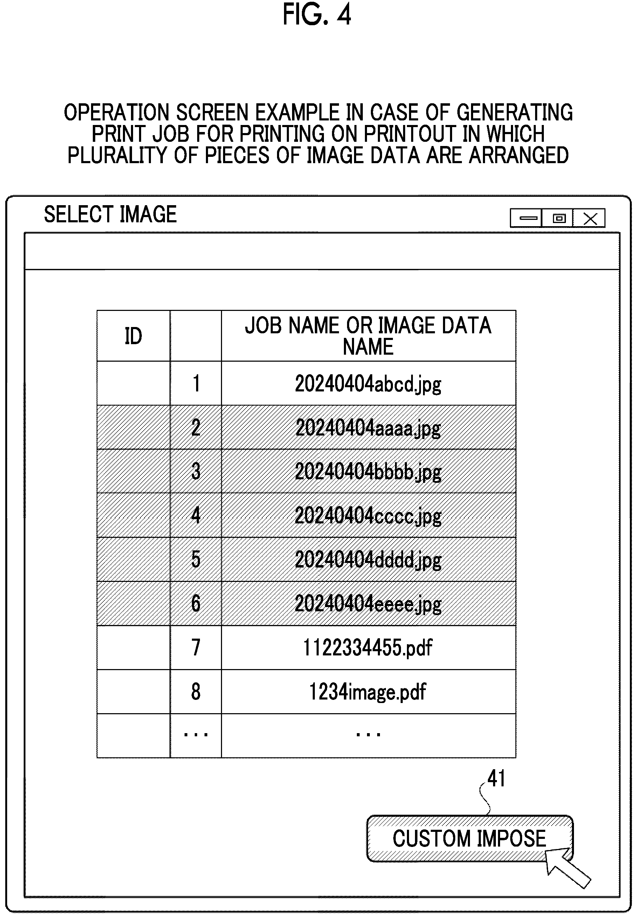

Fig. 4 illustrates an operation screen example in a case of generating a print job for printing a printout, such as a photo album in which a user arranges a plurality of pieces of image data. In the operation screen illustrated in Fig. 4, a mode in which the user selects a plurality of pieces of image data or a print job, and operates an operation button 41 having a name of "custom impose" is illustrated.

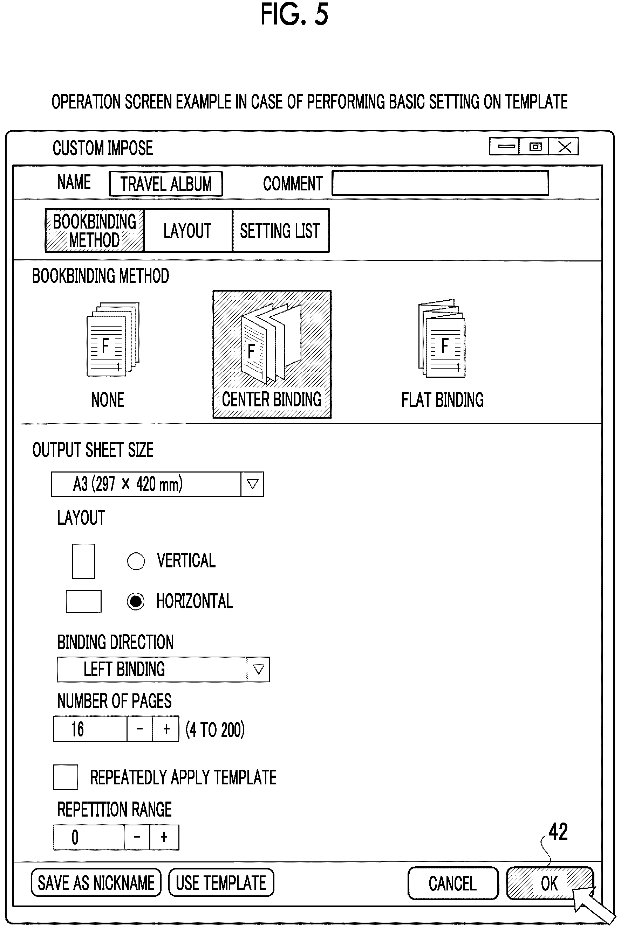

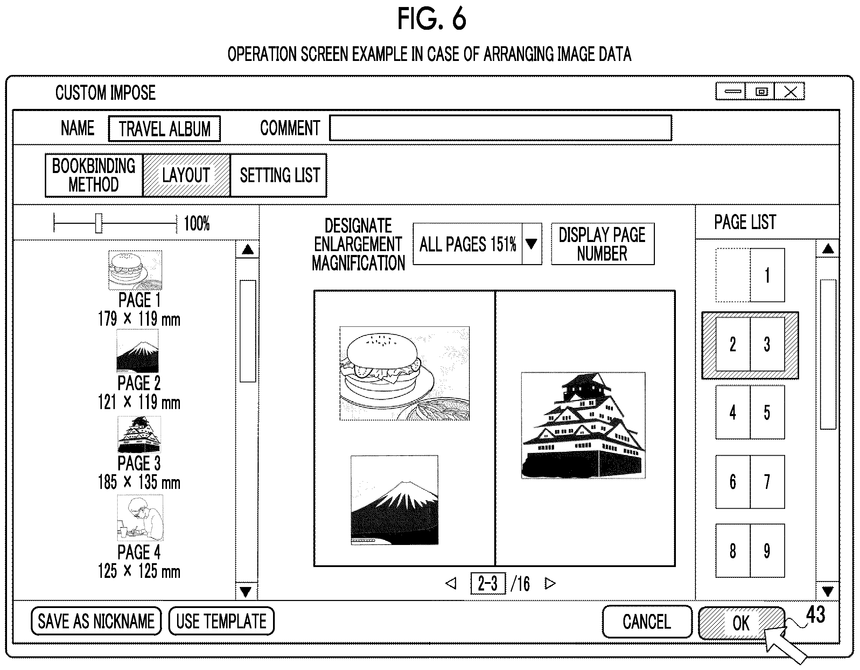

An operation screen example in a case of performing a basic setting on a template that is displayed by operating the operation button 41 is illustrated in Fig. 5. In Fig. 5, the basic setting on the template to be generated is selected. Specifically, "center binding" is selected as a bookbinding method, and "A3" is selected as an output sheet size. In addition, "horizontal" is selected as a layout, "left binding" is selected as a binding direction, and "16" pages are selected as the number of pages. Then, in a case where the user operates the OK button 42 on the operation screen illustrated in Fig. 5, an operation screen in a case of arranging the selected image data or the print job as illustrated in Fig. 6 is displayed.

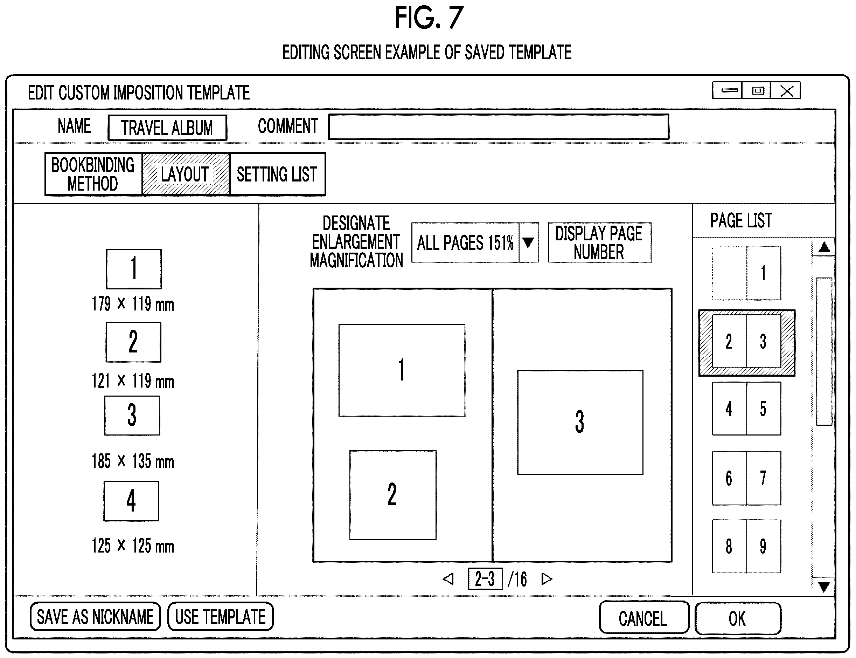

Fig. 6 illustrates a mode where images are arranged while setting a position, a size, and the like at which the image data is to be arranged, with respect to a virtual booklet based on the basic setting selected on the operation screen of Fig. 5. Then, in a case where the user operates an OK button 43 on the operation screen illustrated in Fig. 6, an imposition setting of the position at which the image data is arranged, the size of the image data to be arranged, and the like are saved as a template as illustrated in Fig. 7, and then a print job in which the image data selected in Fig. 4 is assigned to the saved template is generated. A name of the template to be saved may be the same as the generated print job, that is, a "travel album".

The saved template can be edited, for example, on an editing screen as illustrated in Fig. 7. In the editing screen example of the saved template illustrated in Fig. 7, it is possible to edit the arrangement and the size of the image data on each page of the template. The template saved in this manner includes a paper size at a time of an output, the number of output pages, and a bookbinding method at the time of the output. In addition, in the saved template, information such as a position, a number, an image size and a magnification at a time of arrangement, a rotation angle at the time of the arrangement, and whether or not an image to be arranged is transparent is saved, for each region in which the image data is arranged. The number saved for each region is an example of an identifier.

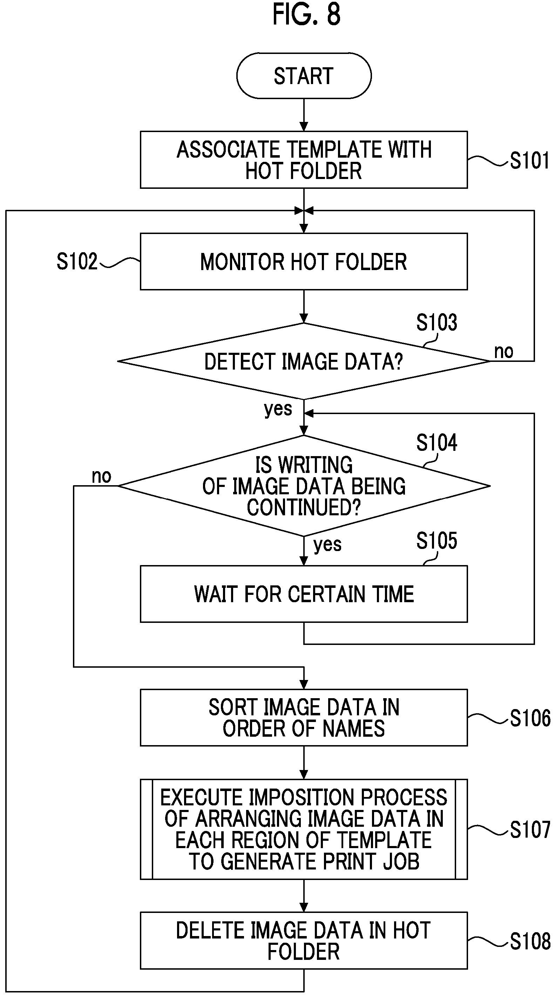

Next, an operation in a case of creating a hot folder in association with a folder for storing the image data by the template saved in this manner is illustrated in a flowchart of Fig. 8.

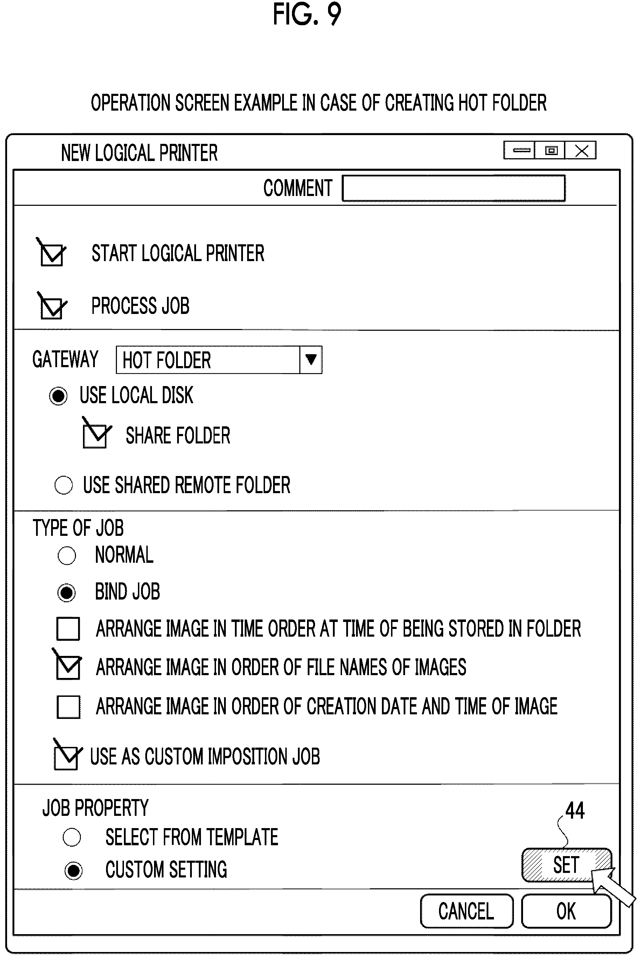

In Fig. 8, first, in step S101, the control unit 34 executes a process of associating a template with a hot folder. An operation screen example at a time of creating such a hot folder is illustrated in Fig. 9.

In the operation screen example in Fig. 9, an operation of creating a new logical printer and creating a hot folder is illustrated. In addition, in Fig. 9, as a type of a job, a "binding job" is selected, and a setting of "use as a custom imposition job" is selected. Further, in Fig. 9, in a case where a plurality of pieces of image data are stored in the hot folder, as a preset rule for determining which image data is assigned to which region of the template, a rule of "arrange images in an order of file names of the images" is selected. As a rule other than the selected rule, a rule of "arrange images in a time order at a time of being stored in a folder" or a rule of "arrange images in an order of creation date and time of the images" can be selected.

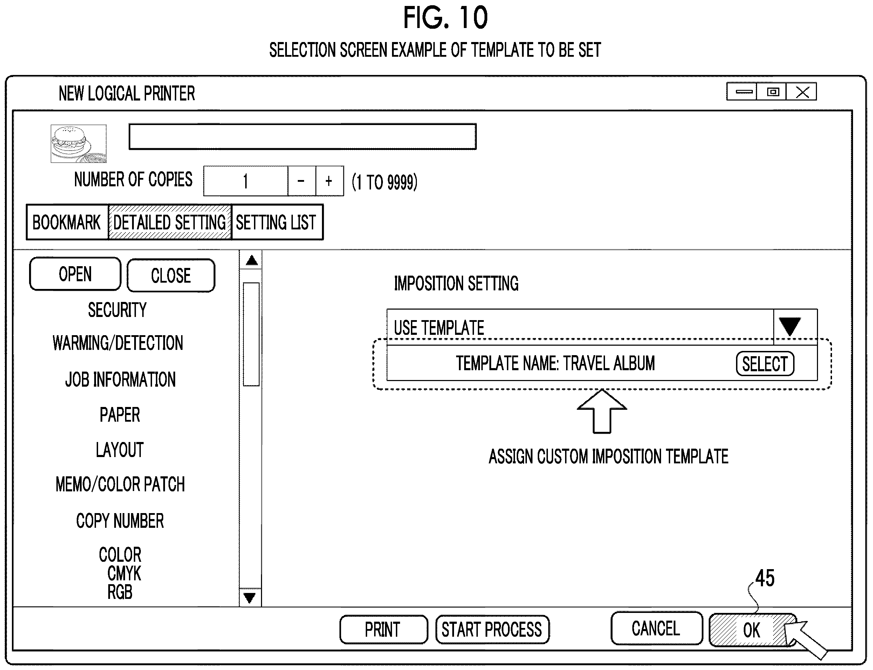

Then, the user performs the selection as illustrated in Fig. 9, and operates a setting button 44, and then a template selection screen to be set in correspondence with the hot folder is displayed as illustrated in Fig. 10. In the selection screen example in Fig. 10, a mode is illustrated in which a custom imposition template having the name "travel album" generated in the operation of the operation screen illustrated in Fig. 6 is selected. After such a template is selected, the user operates an OK button 45 to create a hot folder.

In a case where the hot folder is created in this manner, the control unit 34 monitors the hot folder in step S102. Then, in step S103, the control unit 34 determines whether or not the image data is stored in the hot folder. In a case where it is determined that the image data is not stored in the hot folder in step S103, the control unit 34 returns to step S102, and continues to monitor the hot folder.

In a case where it is determined that the image data is stored in the hot folder in step S103, the control unit 34 determines whether or not writing of the image data is being continued in step S104. In a case where it is determined that the writing of the image data is being continued in step S104, the control unit 34 waits for a certain time in step S105, and then returns to the process of step S104 again.

In a case where it is determined that the writing of the image data is not being continued in step S104, that is, the writing of the image data is ended, the control unit 34 sorts the plurality of pieces of image data stored in the hot folder in an order of the names in step S106. Here, it is described that the rule of "arrange an image in an order of file names of the images" is selected as the preset rule.

Then, in step S107, the control unit 34 executes an imposition process of respectively arranging the image data sorted in the order of the names in each region of the template to generate a print job. Lastly, in step S108, the control unit 34 deletes the image data in the hot folder to end the process.

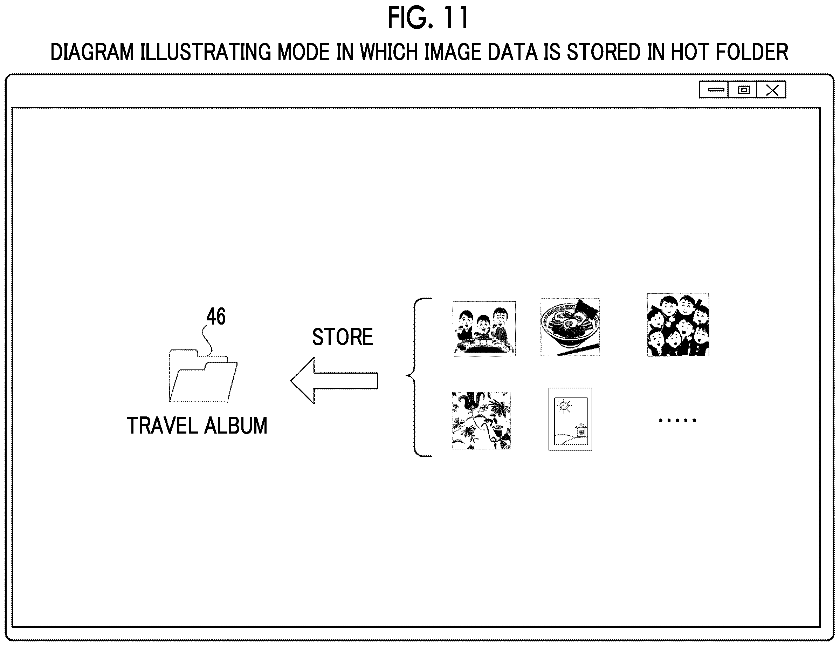

Fig. 11 illustrates a mode in which image data is stored in a hot folder in this manner. Fig. 11 illustrates a mode in which a plurality of pieces of image data are stored in a hot folder 46 having a name of "travel album".

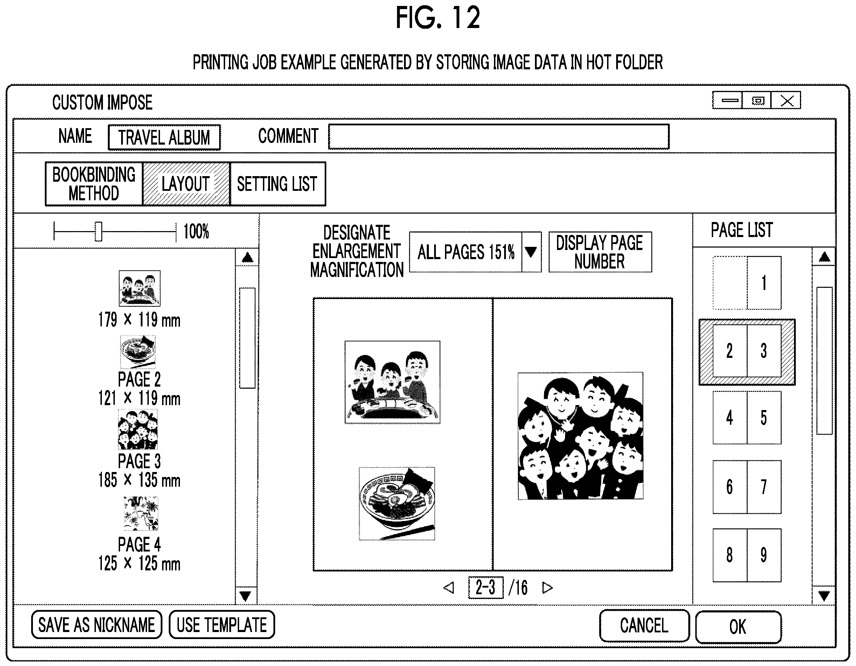

Fig. 12 illustrates a print job example generated by storing the image data in the hot folder in this manner. With reference to Fig. 12, it can be seen that the images based on the plurality of pieces of image data stored in the hot folder 46 are automatically arranged in each region of a template.

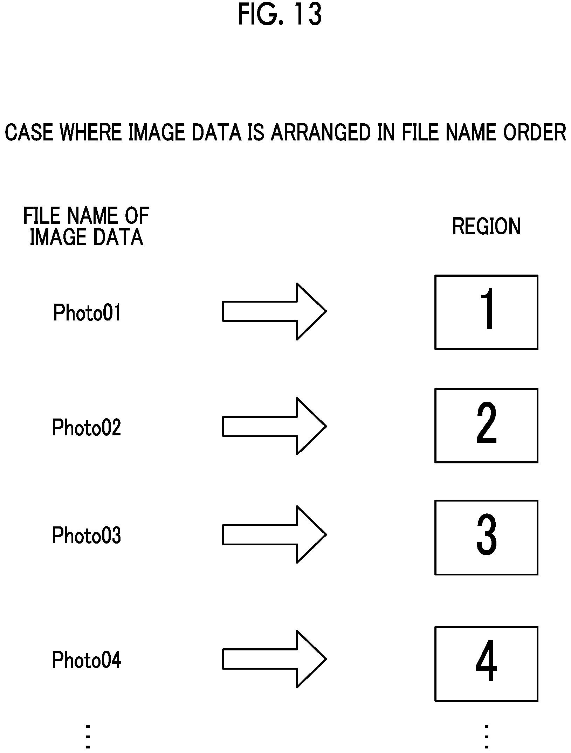

Here, by selecting a setting of arranging the image data in a file name order, the image data stored in the hot folder 46 is arranged in each region of the template in the file name order. For example, as illustrated in Fig. 13, image data having a file name of "Photo001" is arranged in a first region of the template. In addition, image data having file names of "Photo002", "Photo003", and the like are arranged in a second region, a third region, and the like of the template in the order, respectively. In addition, not only in the file name order, but also for image data having a file name of "front cover ∘∘∘", it is possible to arrange the image data in a front cover region of the template.

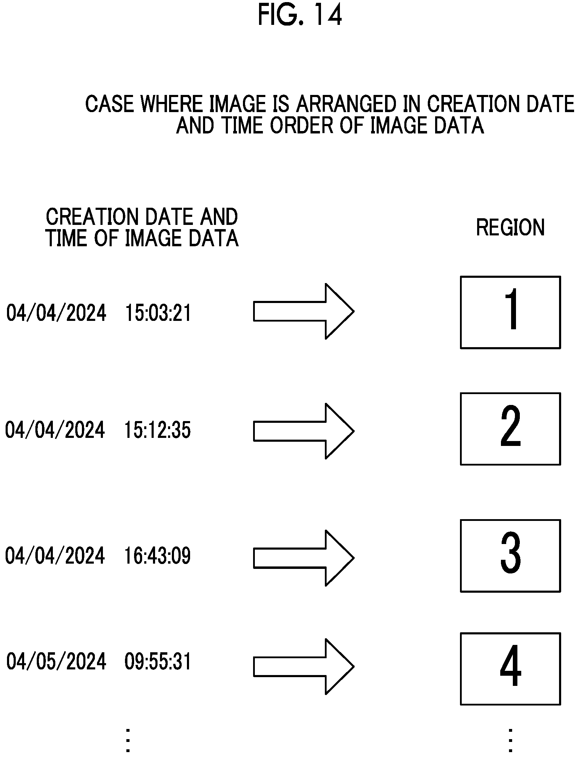

Further, in a case where an option of "arrange images in a creation date and time order" is selected on the setting screen illustrated in Fig. 9, the images are automatically arranged in each region of a template in the creation date and time order of the image data as illustrated in Fig. 14. For example, as illustrated in Fig. 14, image having a creation date and time of "04/04/2024 15:03:21" is arranged in a first region of the template. In addition, each image data having creation date and time of "04/04/2024 15:12:35", "04/04/2024 16:43:09", ... is sequentially arranged in a second region, a third region, ... of the template.

Further, in a case where an option of "arrange images in a time order at a time of being stored in a folder" is selected on the setting screen illustrated in Fig. 9, images are arranged in a region of a template in the order of the time of the image data being stored in the hot folder 46. In such a case, a plurality of pieces of image data are stored in the hot folder 46 one by one at different times, so that the images are automatically arranged in an order in which the image data are stored in the region of the template.

In a case where portable document format (PDF) data is stored in a hot folder as image data, attribute information of the PDF data may be analyzed to arrange the PDF data in each region in an order based on the attribute information. For example, each page of the PDF data may be arranged in each region of a template in an order of described page numbers, or the arrangement order may be determined based on text data included in the PDF data and an identifier assigned to each region of the template.

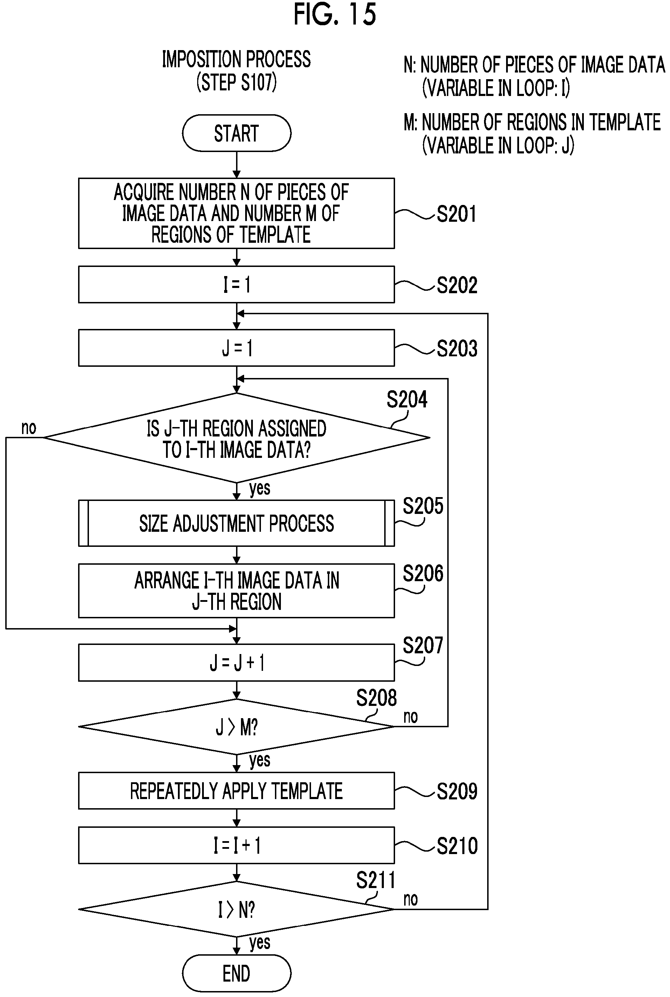

Next, details of the imposition process in step S107, which is described with reference to the flowchart in Fig. 8, will be described with reference to a flowchart in Fig. 15.

In the flowchart of Fig. 15, a case where the number of pieces of image data is N and the number of regions of the template is M will be described.

First, in step S201, the control unit 34 acquires the number N of pieces of image data stored in a hot folder and the number M of regions of a template.

The control unit 34 sets a variable I to 1 in step S202, and sets a variable J to 1 in step S203.

Next, in step S204, the control unit 34 determines whether or not a J-th region is assigned to I-th image data.

In a case where it is determined that the J-th region is assigned to the I-th image data in step S204, the control unit 34 executes a size adjustment process for arranging the I-th image data in the J-th region in step S205. Then, in step S206, the control unit 34 arranges the I-th image data in the J-th region of the template.

Then, in step S207, the control unit 34 adds 1 to the variable J. Even in a case where it is determined that the J-th region is not assigned to the I-th image data in step S204, the control unit 34 adds 1 to the variable J in step S207.

Next, in step S208, the control unit 34 determines whether or not the variable J exceeds the number M of regions in the template.

In a case where it is determined that the variable J does not exceed the number M of regions in step S208, the control unit 34 returns to the process in step S204. In a case where it is determined that the variable J exceeds the number M of regions in step S208, the control unit 34 repeatedly applies the template in step S209. That is, the fact that the variable J exceeds the number M of regions of the template means that the images are arranged in all the regions of the template, so that the control unit 34 repeatedly applies the template again and continues to arrange the image data.

Then, in step S210, the control unit 34 adds 1 to the variable I. Thereafter, in step S211, the control unit 34 determines whether or not the variable I exceeds the number N of pieces of image data.

In a case where it is determined that the variable I does not exceed the total number N of pieces of image data in step S211, the control unit 34 returns to the process in step S203, and sets the variable J to 1.

In a case where it is determined that the variable I exceeds the total number N of pieces of image data in step S211, the control unit 34 determines that the arrangements of all the pieces of image data are completed, and ends the process.

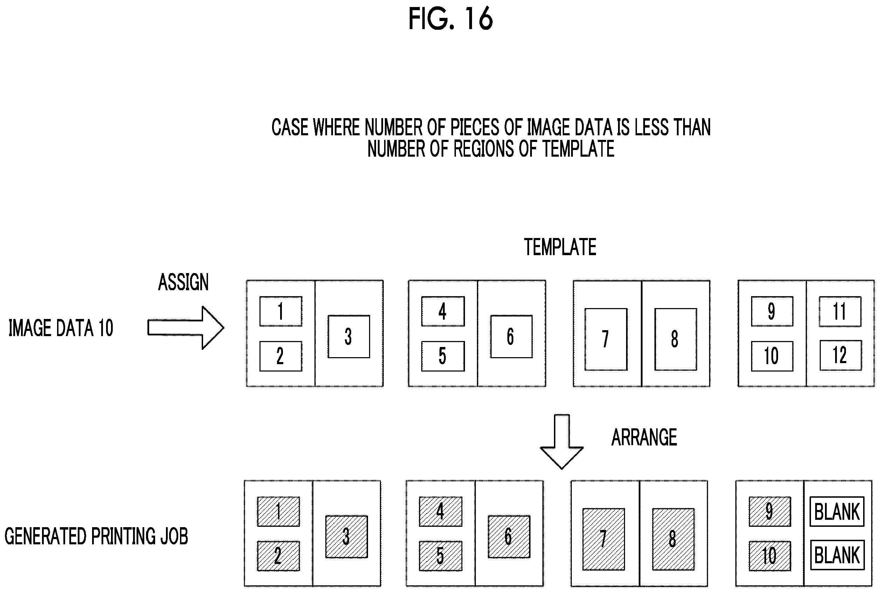

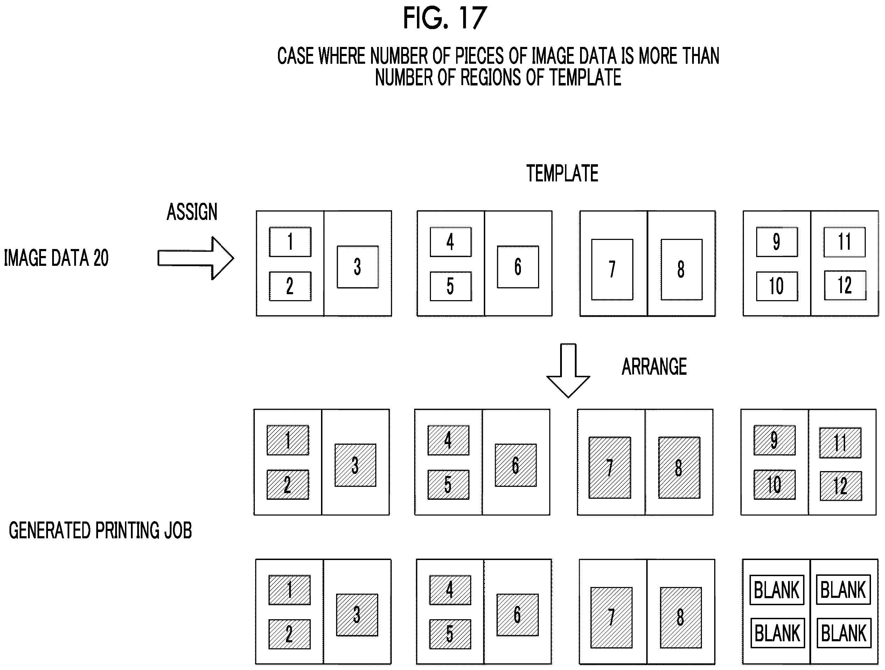

In this manner, Figs. 16 and 17 illustrate examples of arrangement of image data in a case where the number of pieces of image data arranged in each region of a template is different from the number of regions of the template. Fig. 16 is a diagram illustrating an arrangement example in a case where the number of pieces of image data is less than the number of regions of the template. In addition, Fig. 17 is a diagram illustrating an arrangement example in a case where the number of pieces of image data is more than the number of regions of the template. In Figs. 16 and 17, a case where the number of regions of the template is 12 is described as a specific example. In addition, in Fig. 16, a case where the number of pieces of image data to be arranged is 10 will be described, and in Fig. 17, a case where the number of pieces of image data to be arranged is 20 will be described.

Referring to Fig. 16, it can be seen that, in a case where the number of regions of the template is 12 and the number of pieces of image data is 10, a print job in which an eleventh region and a twelfth region of the template are in a blank state is generated. In addition, with reference to Fig. 17, the template is applied twice since the number of pieces of image data is 20 while the number of regions of the template is 12. It can be seen that a print job is generated in which in a first template, the images are arranged in all the 12 regions, and in a second template, the ninth and subsequent regions are in a blank state is generated.

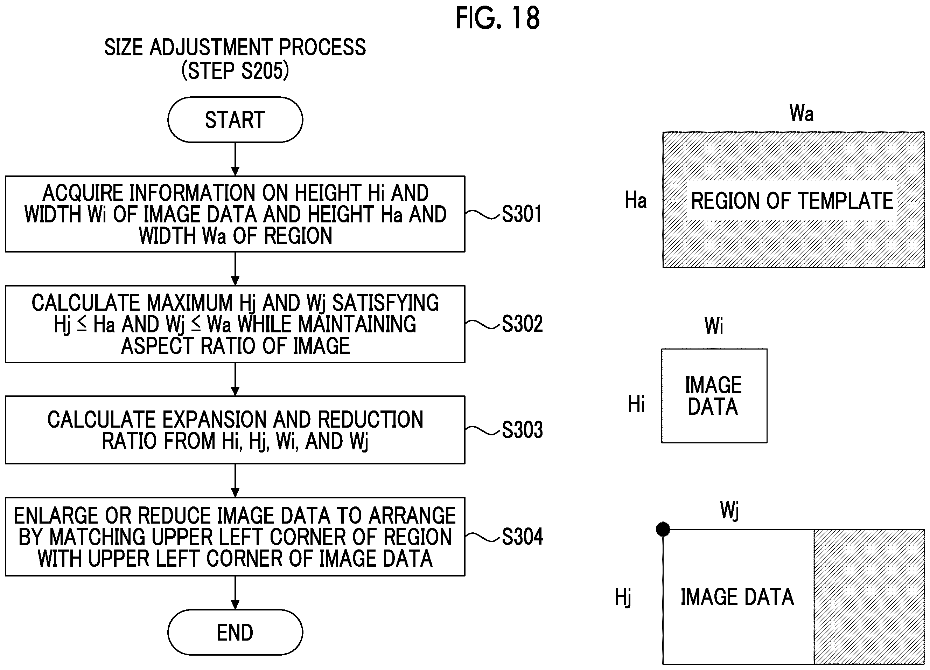

Next, details of the size adjustment process in step S205, which is described with reference to the flowchart in Fig. 15, will be described with reference to a flowchart in Figs. 18A and 18B.

First, in step S301, the control unit 34 acquires information on a height Hi and a width Wi of image data and a height Ha and a width Wa of a region.

Then, in step S302, in a case where the height Hi and the width Wi of the image data are enlarged or reduced to the height Hj and the width Wj, the control unit 34 calculates the maximum Hj and Wj satisfying Hj ≤ Ha and Wj ≤ Wa while maintaining an aspect ratio of the image.

Next, in step S303, the control unit 34 calculates an enlargement and reduction ratio from the height Hi and the width Wi of the image data before enlargement or reduction and the height Hj and the width Wj of the image data after the enlargement or the reduction. Specifically, Hj / Hi = Wj / Wi = enlargement and reduction ratio is satisfied.

Lastly, in step S304, the control unit 34 enlarges or reduces the image data based on the enlargement and reduction ratio calculated from the image data to arrange the image on the region by matching an upper left corner of the region with an upper left corner of the image data.

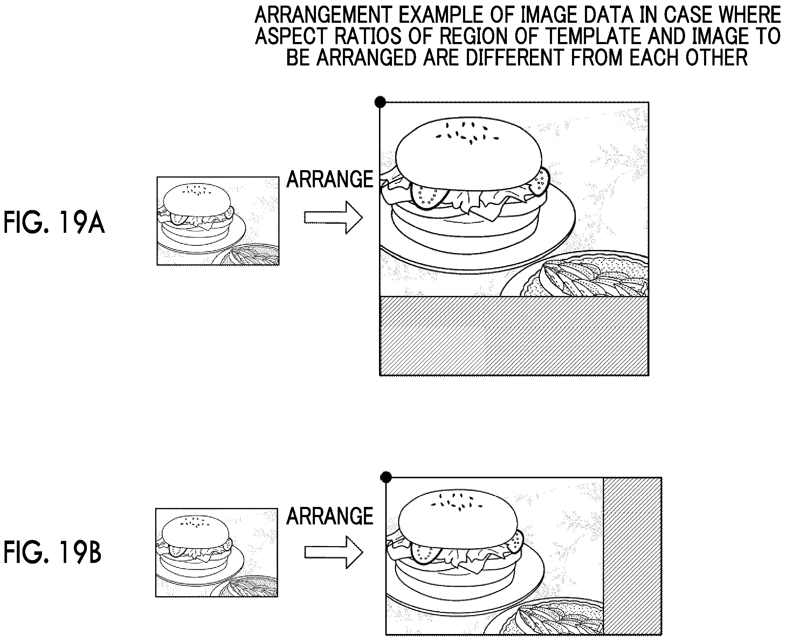

In this manner, Figs. 19A and 19B illustrate an example of arrangement of image data in a case where aspect ratios of a region of a template and an image to be arranged are different from each other.

In Fig. 19A, a mode is illustrated in which a blank portion is formed on a lower side of a region by performing enlargement or reduction such that a width of the image data to be arranged is matched with a width of the region of the template. In addition, in Fig. 19B, a mode is illustrated in which a blank portion is formed on a right side of a region by performing enlargement or reduction such that a height of the image data to be arranged is matched with a height of the region of the template.

In the above, a case where a print job corresponding to the number of image data stored in a hot folder is generated based on the template is described. A print job may be automatically generated after waiting until the number of pieces of image data stored in the hot folder reaches the number of regions of the template. That is, a print job may be generated at a time point in a case where the number of pieces of image data stored in the hot folder coincides with the number of regions of the template.

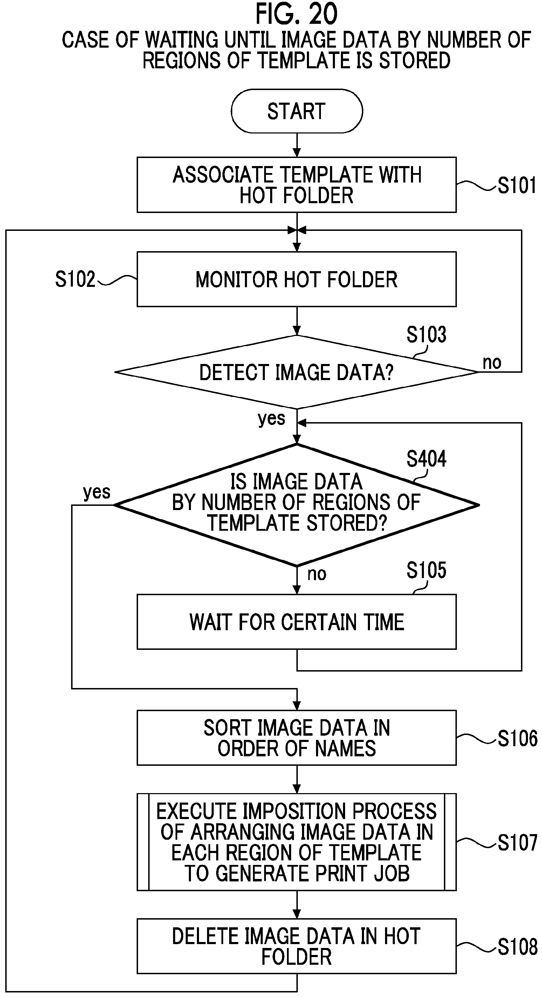

An operation in a case of generating the print job after waiting until the image data by the number of regions of the template is stored is illustrated in a flowchart of Fig. 20.

A flowchart of Fig. 20 is the same as the flowchart illustrated in Fig. 8, except that the process of step S 104 is replaced with a process of step S404. Therefore, in the following, only the process different from the flowchart of Fig. 8 will be described.

In a case where it is determined that the image data is stored in the hot folder in step S103, the control unit 34 determines whether or not the image data by the number of regions of the template is stored, in step S404. In step S404, in a case where it is determined that the image data by the number of regions of the template is not stored, the control unit 34 returns to the process of step S404 again after waiting for a certain time in step S105.

Then, in step S404, in a case where it is determined that the image data by the number of regions of the template is stored, the control unit 34 executes the imposition process of executing the process in and after step S106 to arrange the image data in each region of the template.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The term "system" in the present exemplary embodiment includes both a system configured by a plurality of devices and a system configured by a single device.

### [Modification Example]

In the exemplary embodiments described above, although a case where the print job of the printout using the template is generated in the image forming apparatus 10 capable of executing the printing process is described, the present disclosure is not limited thereto. The present disclosure can be similarly applied to a case of generating a print job of a printout using a template in various types of information processing apparatuses or information processing systems, such as a personal computer, which do not have a function of executing the printing process.

### [Supplementary Note]

Hereinafter, the exemplary embodiments according to the present disclosure will be described.
(((1))) An information processing system comprising:
   a processor configured to:
   acquire template information including at least information related to a plurality of regions on a printout, in which an image is to be arranged and to which different identifiers are respectively assigned;
   store the template information in association with a folder for storing image data; and
   in a case where the image data is stored in the folder, generate a print job of arranging an image corresponding to the stored image data on the printout, based on the template information associated with the folder and a preset rule.
(((2))) The information processing system according to (((1))),
   wherein the preset rule is a rule determined based on a name of the image data stored in the folder and an identifier.
(((3))) The information processing system according to (((1))),
   wherein the preset rule is a rule determined based on a time in a case where the image data is stored in the folder and an identifier.
(((4))) The information processing system according to any one of (((1))) to (((3))), wherein the processor is configured to:
   acquire the number of regions indicated by the template information associated with the folder; and
   in a case where the number of pieces of the image data stored in the folder is equal to or more than the acquired number of regions, generate a print job.
(((5))) The information processing system according to any one of (((1))) to (((3))), wherein the processor is configured to:
   acquire the number of regions indicated by the template information associated with the folder; and
   in a case where the number of pieces of the image data stored in the folder is less than the acquired number of regions, not generate a print job.
(((6))) The information processing system according to any one of (((1))) to (((5))), wherein the processor is configured to:
   in a case where a size of a region on the printout indicated by the template information and a size of the image to be arranged in the region are different from each other, include an entirety of the image in the region without changing an aspect ratio of the image, and arrange the image in the region by enlarging or reducing the image up to a maximum size of the image.
(((7))) The information processing system according to any one of (((1))) to (((6))), wherein the processor is configured to:
   in a case where the number of plurality of the image data to be arranged in a region indicated by the template information is more than the number of regions on the printout indicated by the template information, generate a print job by repeating a pattern of the region indicated by the template information.
(((8))) The information processing system according to any one of (((1))) to (((7))), wherein the processor is configured to:
   create and save template information by accepting designation of a range of a region for setting a position and a size of the image to be arranged on the printout, respectively.
(((9))) A program causing a computer to execute a process comprising:
   acquiring template information including at least information related to a plurality of regions on a printout, in which an image is to be arranged and to which different identifiers are respectively assigned;
   storing the template information in association with a folder for storing image data; and
   generating, in a case where the image data is stored in the folder, a print job of arranging an image corresponding to the stored image data on the printout, based on the template information associated with the folder and a preset rule.

The effects of the configuration of the supplementary note will be described below.

With the information processing system according to (((1))), in a case of determining arrangement of the image on the printout, it is possible to reduce a possibility that the arrangement is different from an intention of a user, as compared with a case of determining the arrangement of the image on the printout without considering anything.

With the information processing system according to (((2))), it is possible to reduce a possibility that the arrangement is not intended by the user, as compared with a case where the region on the printout on which the image corresponding to the stored image data is arranged is determined without considering anything.

With the information processing system according to (((3))), it is possible to reduce a possibility that the arrangement is not intended by the user, as compared with a case where the region on the printout on which the image corresponding to the stored image data is arranged is determined without considering anything.

With the information processing system according to (((4))), it is possible to reduce a possibility that the image is not arranged in the region included in the template information.

With the information processing system according to (((5))), it is possible to reduce a possibility that the image is not arranged in the region included in the template information.

With the information processing system according to (((6))), it is possible to reduce a possibility that the image has a size which is not intended by the user, as compared with a case where the image is arranged without considering a size of the region.

With the information processing system according to (((7))), even in a case where the number of regions included in the template information and the number of pieces of the image data to be arranged are different from each other, it is possible to generate a print job on the printout on which the image data is to be arranged.

With the information processing system according to (((8))), the user can create the template information only by setting the position and the size at which the image is to be arranged.

With the program according to (((9))), in a case of determining arrangement of the image on the printout, it is possible to reduce a possibility that the arrangement is different from an intention of a user, as compared with a case of determining the arrangement of the image on the printout without considering anything.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
11: CPU
12: memory
13: storage device
14: communication interface
15: user interface device
16: image forming unit
17: control bus
20: terminal device
30: network
31: operation input unit
32: display unit
33: data transmission and reception unit
34: control unit
35: template storage unit
36: image data storage unit
37: printing processing unit
41: operation button
42: OK button
43: OK button
44: setting button
45: OK button
46: hot folder

## Claims

1. An information processing system comprising:
a processor configured to:
acquire template information including at least information related to a plurality of regions on a printout, in which an image is to be arranged and to which different identifiers are respectively assigned;
store the template information in association with a folder for storing image data; and
in a case where the image data is stored in the folder, generate a print job of arranging an image corresponding to the stored image data on the printout, based on the template information associated with the folder and a preset rule.

2. The information processing system according to claim 1,
wherein the preset rule is a rule determined based on a name of the image data stored in the folder and an identifier.

3. The information processing system according to claim 1,
wherein the preset rule is a rule determined based on a time in a case where the image data is stored in the folder and an identifier.

4. The information processing system according to any one of claims 1 to 3, wherein the processor is configured to:
acquire the number of regions indicated by the template information associated with the folder; and
in a case where the number of pieces of the image data stored in the folder is equal to or more than the acquired number of regions, generate a print job.

5. The information processing system according to any one of claims 1 to 3, wherein the processor is configured to:
acquire the number of regions indicated by the template information associated with the folder; and
in a case where the number of pieces of the image data stored in the folder is less than the acquired number of regions, not generate a print job.

6. The information processing system according to any one of claims 1 to 5, wherein the processor is configured to:
in a case where a size of a region on the printout indicated by the template information and a size of the image to be arranged in the region are different from each other, include an entirety of the image in the region without changing an aspect ratio of the image, and arrange the image in the region by enlarging or reducing the image up to a maximum size of the image.

7. The information processing system according to any one of claims 1 to 6, wherein the processor is configured to:
in a case where the number of plurality of the image data to be arranged in a region indicated by the template information is more than the number of regions on the printout indicated by the template information, generate a print job by repeating a pattern of the region indicated by the template information.

8. The information processing system according to any one of claims 1 to 7, wherein the processor is configured to:
create and save template information by accepting designation of a range of a region for setting a position and a size of the image to be arranged on the printout, respectively.

9. A program causing a computer to execute a process comprising:
acquiring template information including at least information related to a plurality of regions on a printout, in which an image is to be arranged and to which different identifiers are respectively assigned;
storing the template information in association with a folder for storing image data; and
generating, in a case where the image data is stored in the folder, a print job of arranging an image corresponding to the stored image data on the printout, based on the template information associated with the folder and a preset rule.

10. An information processing method comprising:
acquiring template information including at least information related to a plurality of regions on a printout, in which an image is to be arranged and to which different identifiers are respectively assigned;
storing the template information in association with a folder for storing image data; and
generating, in a case where the image data is stored in the folder, a print job of arranging an image corresponding to the stored image data on the printout, based on the template information associated with the folder and a preset rule.
